# EUROPEAN PATENT APPLICATION

(11) **EP 2 465 875 A1**
(43) Date of publication of application: **20.06.2012**
(21) Application number: 10195740.5
(22) Date of filing: 17.12.2010
(51) Int. Cl.: C08F 2/46, C08F 20/18, C08F 220/10, C09J 4/00

(54) **Process for the preparation of radiation curable compositions**

(71) Applicant: Cytec Surface Specialties, S.A., 1070 Brussels (BE)
(72) Inventor: Clark, Graham, 3090 Overijse (BE); Van Holen, Jurgen, 9030 Mariakerke (BE); Van Muylder, Marc, 9500 Geraardsbergen (BE)
(74) Representative: Destryker, Elise Martine

(57) **Abstract**

The present invention relates to a process for the preparation of a radiation curable composition comprising at least one (meth)acrylic copolymer A and at least one radiation curable epoxy based compound B, said process comprising a first copolymerization step, and a subsequent esterification step.

## Description

The present invention relates to a process for the preparation of radiation curable compositions as well as their use for making adhesives and/or pressure sensitive adhesives.

Solvent process is a widely known method for production of radiation curable adhesives. It normally involves the following three steps: (1) A radiation curable resin (polymer, copolymer, or their blend) solution is made by polymerization of monomers or by chemical modification of oligomer (such as acrylated urethane polymer) in solvent; (2) Other functional additives such as tackifier and photoinitiator are dissolved in the resin solution; (3) Solvent is evaporated to result in the end-product. However, solvent processes suffer from a number of major shortcomings, including longer production time, higher energy consumption, and more difficulties in the control of the production process and final product quality. More importantly, such processes cannot remove solvent completely under normal production conditions and the end-product always contains some residual solvents which can result in the emission of solvent vapors after the application leading to outgassing issues in the final use. In other words, the end-product made by solvent process is not really free of VOC.

Solventless process is more desirable for production of radiation curable adhesive because it involves 100% convertible materials with a simpler and more economical manufacture practice. There are several prior arts that describe different solventless processes for making radiation curable adhesive.

U.S. patents 4,181,752, 4,364,972, and 4,243,500 disclose an actinic radiation process for the preparation of an acrylic pressure sensitive adhesive (PSA) by photopolymerizing an alkyl acrylate and a polar copolymerizable monomer (e.g., acrylic acid, N-vinyl pyrrolidone, etc.). However, the performance of this type of adhesive is very sensitive to processing conditions as well as the thickness of the composition.

US 5,741,543 describes a syrup polymer process in which a partially prepolymerized composition is coated onto a substrate and crosslinked to form a PSA by polymerizing free radical polymerizable monomers from covalently attached pendent unsaturation in polymer component of the composition. This process is also sensitive to the process conditions as well as the thickness of the composition.

US 6,436,532 discloses a multi-stage irradiation process for the production of an acrylic-based adhesive. In this process, a mixture of acrylic monomer or partially prepolymerized syrup is irradiated with electromagnetic radiation first at a relatively low average intensity and subsequently at a higher average intensity.

US 5,879,759 describes a two-step method for the production of a PSA by radiation curing. The method comprises the steps of irradiating a soft monomers composition to form a coatable syrup, followed by adding at least one hard monomer and one multifunctional monomer or oligomer to the syrup, and further irradiating the mixture to form a PSA.

However the solventless processes above have a number of common disadvantages. During synthesis, because of the low molecular weight (MW) of the monomers, it is virtually impossible to polymerize them into high MW end-products in the curing time frames usually encountered in the real production conditions. The application of the partially prepolymerized syrup obtained may be a safety concern because it contains significant amounts of free monomers that may be hazardous like acrylic acid. The same remains true after curing because under normal production conditions the cured product always contains some residual monomers.

There is still a need to overcome the disadvantages and limitations that exist with both solvent processes and solventless processes for production of radiation curable adhesives.

In accordance with the present invention, the applicant has now discovered a new process for the preparation of radiation curable adhesive compositions that overcomes the above cited disadvantages.

The present invention therefore relates to a process for the preparation of a radiation curable composition comprising at least one (meth)acrylic copolymer A and at least one radiation curable epoxy based compound B, said process comprising:
(a) in a first copolymerization step, the preparation of a (meth)acrylic copolymer A by copolymerization of monomers comprising:
   (i) from 39 to 98.9 weight % of at least one (meth)acrylic monomer (a1),
   (ii) from 0.1 to 60 weight % of at least one other copolymerizable monomer (a2) different from (meth)acrylic monomer (a1),
   (iii) from 1 to 15 weight % of at least one copolymerizable monomer (a3) having at least one carboxylic acid group or group capable of forming a carboxylic acid group,
   in the presence of at least one non-copolymerizable epoxy compound (b1) and
(b) in a subsequent esterification step, the preparation of a radiation curable epoxy based compound B by esterification of the non-copolymerizable epoxy compound (b1) with at least one radiation curable monomer having at least one carboxylic acid group (a4).

The amounts of monomers (a1), (a2) and (a3) are defined based on the total amount of monomers (a1), (a2) and (a3).

The term "(meth)acryl" used in the present invention is meant to encompass both the terms "acryl" and "methacryl" and refers to compounds comprising at least one acrylate (CH2=CHCOO-) or methacrylate (CH2=CCH3COO-) group, as well as mixtures thereof and mixtures of such compounds.

Words importing the singular number only include the plural and vice versa.

The (meth)acrylic monomer (a1) is preferably selected from alkyl(meth)acrylates having a Tg (glass transition temperature), when homopolymerized, of equal or less than -30°C. The alkyl(meth)acrylates having a Tg, when homopolymerized, of equal or less than -30°C are preferably selected from linear and branched aliphatic alkyl(meth)acrylates, more preferably from (meth)acrylates wherein the alkyl group comprises from 3 to 20 carbon atoms. Particularly preferred are 2-ethyl hexylacrylate, butylacrylate and mixtures thereof. The glass transition temperature, Tg, is determined according to ASTM E1356-08. The measurements are conducted on a DSC823e instrument of Mettler at a heating rate of 10 °C/min. The DSC cell is purged with nitrogen gas at a flow rate of 50 ml/min and the sample mass is about 10 mg. The Tg is estimated from a heat flow-temperature thermogram as the midpoint of the transition.

The copolymerizable monomer (a2) is preferably selected from monomers having a Tg, when homopolymerized, of more than -30°C. Suitable monomers (a2) are linear and branched aliphatic alkyl(meth)acrylates, especially those wherein the alkyl group comprises from 1 to 20 carbon atoms, vinyl acetate, styrene and mixtures thereof. Particularly preferred are methyl (meth)acrylate, ethylacrylate, tert-butyl (meth)acrylate, vinyl acetate, styrene and mixtures thereof.

Although monomers comprising epoxy groups may be used as monomers (a1) and (a2), it is preferred to use monomers (a1) and (a2) that do not comprise an epoxy group.

The copolymerizable monomer (a3) is generally a compound comprising at least one carboxylic acid group or group capable of forming a carboxylic acid group and at least one copolymerizable carbon-carbon double bond. By group capable of forming a carboxylic acid group is meant any group such as anhydrides and esters that can lead to the formation of a carboxylic acid group upon chemical modification. Suitable monomers (a3) include (meth)acrylic acid, β-carboxyethyl(meth)acrylate, crotonic acid, maleic acid, fumaric acid, itaconic acid and mixtures thereof. The monomer (a3) is preferably (meth)acrylic acid, more preferably acrylic acid.

The radiation curable monomer (a4) is a compound comprising at least one carboxylic acid group and at least one copolymerizable carbon-carbon double bond. Suitable monomers (a4) include (meth)acrylic acid, β-carboxyethyl(meth)acrylate, crotonic acid, maleic acid, fumaric acid, itaconic acid and mixtures thereof. The monomer (a4) is preferably (meth)acrylic acid, more preferably acrylic acid.

The (meth)acrylic copolymer A is prepared by copolymerizing in a first step (the "copolymerization step") the (meth)acrylic monomer (a1) and the copolymerizable monomers (a2) and (a3), in the presence of the non-copolymerizable epoxy compound (b1), so that a (meth)acrylic copolymer A comprising at least one carboxylic acid group or group capable of forming a carboxylic acid group derived from monomer (a3) is obtained. Copolymer A may be a random, alternating or block copolymer. It is preferably a random copolymer. The copolymerization step is followed by a subsequent step (the "esterification step") wherein the non-copolymerizable epoxy compound (b1) reacts with the carboxylic acid groups present on the radiation curable monomer (a4) forming the radiation curable epoxy based compound B.

The copolymerization in the copolymerization step may take place by free-radical copolymerization. This may take place in a manner known to the skilled person by conventional methods, particularly by free-radical polymerization using thermal radical initiators. Examples of suitable thermal radical initiators include peroxides, such as benzoyl peroxide, azo compounds, such as azo-bis-isobutyronitrile, and the like. The initiators may be used, for example, in amounts from 0.05 to 2.0 % by weight of the starting monomers.

To achieve a good control of the molecular weight and its distribution, a chain transfer agent, preferably of the mercaptan type, such as n-dodecylmercaptan, tert-dodecanethiol, iso-octylmercaptan, n-octylmercaptan or of the carbon halide type, such as carbon tetrabromide, bromotrichloromethane, can also be added in the course of the reaction. The chain transfer agent is generally used in amounts of up to 5 % by weight of the monomers used in the copolymerisation.

The copolymerization is generally carried out at a temperature from 60 to 150 °C, preferably under an inert gas atmosphere.

The reaction in the subsequent esterification step may take place at temperatures from 60 to 135°C without catalyst or using catalysts, for example those known to catalyze esterification through epoxy/carboxy reactions, such as chromium compounds, tertiary amines, phosphines and the like.

The non-copolymerizable epoxy compound (b1) used in the process is preferably selected from epoxy compounds that do not distill out of the reaction mixture under the conditions of the free-radical polymerization. By non-copolymerizable epoxy compound is meant to designate in the present invention a compound comprising at least one epoxide group and that is essentially inert under the conditions of the free-radical copolymerization, especially that does not contain (meth)acrylate or other vinylic groups that permit the copolymerization with monomers (a1), (a2) and (a3), especially under free-radical polymerization conditions.

Suitable non-copolymerizable epoxy compounds (b1) are for instance epoxidized olefins, epoxidized phenol-formaldehyde copolymers (also known as Novolac® resins), epoxidized natural oils, mono- and polyglycidyl esters, mono- and polyglycidyl ethers and mixtures thereof. The non-copolymerizable epoxy compound (b1) is preferably a compound comprising 1 to 5, preferably 1 to 3, more preferably 1 or 2, epoxy groups per molecule. The epoxy compound (b1) is advantageously selected from glycidyl esters of saturated or unsaturated carboxylic acids, glycidyl ethers of aliphatic or aromatic polyols, and mixtures thereof. Preferred are the glycidyl esters of saturated and unsaturated carboxylic acids, especially the monoglycidyl esters of long chain alkyl carboxylic acids wherein the alkyl chain comprises from 6 to 24 carbon atoms, more preferably from 8 to 18 carbon atoms. Particularly preferred are the glycidyl esters of long chain alkyl carboxylic acids wherein the alkyl chain is branched. Examples of such compounds are glycidyl ester of neodecanoic acid (also known as Cardura®E-10P), butyl glycidyl ether, cresyl glycidyl ether, phenyl glycidyl ether, nonylphenyl glycidyl ether, p-tert-butylphenyl glycidyl ether, 2-ethylhexyl glycidyl ether, C8-10 alkyl glycidyl ethers, C12-14 alkyl glycidyl ethers. Preferred are aliphatic compounds. Particularly preferred is the glycidyl ester of neodecanoic acid.

In the process according to the invention generally:
(i) from 5 to 60 % by weight of non-copolymerizable epoxy compound (b1), and
(ii) from 40 to 95 % by weight of monomers comprising the monomers (a1), (a2) and (a3) based on the total weight of non-copolymerizable epoxy compound (b1) and monomers comprising the monomers (a1), (a2) and (a3), are used.

The amount of non-copolymerizable epoxy compound (b1) used is preferably at least 10 % by weight, more preferably at least 15 % by weight, preferably it does not exceed 55 % by weight, more preferably it does not exceed 50 % by weight. The total amount of monomers (a1), (a2) and (a3) used is preferably at least 45 % by weight, more preferably at least 50 % by weight, preferably it does not exceed 90 % by weight, more preferably it does not exceed 85 % by weight.

The amount of monomer (a4) used in the esterification step is such that the equivalent ratio of carboxylic acid groups of monomer (a4) to epoxy groups provided by the non-copolymerizable epoxy compound (b1) is preferably at least 0.5, more preferably at least 0.7, most preferably at least 0.9. Generally, it does not exceed 2.1, it does preferably not exceed 2.0. More preferably, it does not exceed 1.1, it does most preferably not exceed 1.0.

The process according to the invention generally takes place in the absence of substantial amounts of solvent, usually less than 1 % of solvent relative to the total amount of reagents.

The process according to the invention permits to obtain radiation curable compositions comprising:
(i) from 20 to 93 % by weight of (meth)acrylic copolymer A, and
(ii) from 7 to 80 % by weight of radiation curable epoxy based compound B
based on the total weight of (meth)acrylic copolymer A and of radiation curable epoxy based compound B.

Compositions obtained by the process according to the invention typically comprise less than 1 % by weight of solvent based on the total weight of (meth)acrylic copolymer A and of radiation curable epoxy based compound B. The compositions advantageously comprise less than 0.2 % by weight of solvent. By solvent is meant any substance that is capable of dissolving another substance to form a uniformly dispersed mixture at the molecular or ionic size. The solvent is not reactive under the curing conditions and has to be removed from the liquid composition either before or after curing. The compositions obtained by the process according to the invention do not give rise to the emission of solvent vapors during application and do not suffer from outgassing issues in the final use. Their production is more efficient in terms of production time, energy consumption and is safer. Furthermore, the compositions obtained by the process of the present invention are not limited to (meth)acrylic copolymers A having a low molecular weight. The weight average molecular weight of (meth)acrylic copolymer A preferably ranges from 50 to 500 kDa, more preferably from 100 to 300 KDa. The weight-average molecular weight (Mw) is determined by conventional gel permeation chromatography (GPC) with polystyrene standards EasyCal from Polymer Laboratories (Molecular Weight range: 200 - 7.500.000 g/mol). A small portion of sample is dissolved in tetrahydrofuran (THF) and injected into a liquid chromatograph (Merck-Hitachi L7100) equipped with 4 PLGel Mixed-A polystyrene-divinylbenzene GPC columns (300mm X 7.5mm X 20µm). The components of the sample are separated by the GPC columns based on their molecular size in solution and detected by a Refractive Index detector. Data were gathered and processed by Polymer Laboratories Cirrus GPC software.

The present invention also relates to radiation curable compositions obtainable by the process according to the invention as previously described, more specifically comprising:
(i) from 20 to 93 % by weight of (meth)acrylic copolymer A, and
(ii) from 7 to 80 % by weight of radiation curable epoxy based compound B
based on the total weight of (meth)acrylic copolymer A and of radiation curable epoxy based compound B.

The radiation curable compositions preferably comprise from 40 to 90 % by weight of (meth)acrylic copolymer A, and from 10 to 60 % by weight of radiation curable epoxy based compound B.

The process according to the invention may also contain steps wherein the compositions such as described here above are mixed with at least one compound C to obtain radiation curable compositions comprising:
(i) from 40 to 99 % by weight of the radiation curable composition comprising the (meth)acrylic copolymer A and the radiation curable epoxy based compound B, and
(ii) from 1 to 60 % by weight of at least one compound C,
based on the total weight of (meth)acrylic copolymer A, radiation curable epoxy based compound B and compound C.

The radiation curable compositions preferably comprises from 75 to 99 % by weight of the radiation curable composition comprising the (meth)acrylic copolymer A and the radiation curable epoxy based compound B, and from 1 to 25 % by weight of compound C.

Compound C is generally selected from inert or non inert radiation curable compounds, and tackifiers or any mixtures thereof. By inert radiation curable compound is meant any radiation curable compound that is reactively inert towards the compounds present during the esterification step of the process under the reaction conditions. By non inert radiation curable compound is meant any radiation curable compound that is chemically reacting with any of the (meth)acrylic copolymer A and/or epoxy compound (b1) during the esterification step of the process under the reaction conditions. Inert and non inert radiation curable compounds will be obvious to the man skilled in the art in the following lists.

When compound C is an inert radiation curable compound, it is preferably added after the copolymerization step and before, during and/or after the esterification step of the process of the present invention, either partially or completely. In the special embodiment of this invention where a non inert radiation curable compound C is used, it is preferably added after the esterification step of the process of the present invention. When compound C is a tackifier, it is preferably added at any step of the process of the present invention.

The radiation curable compounds C are preferably selected from (meth)acrylated oligomers, from (meth)acrylated monomers and from mixtures thereof.

The (meth)acrylated oligomers are generally selected from the group of polyester (meth)acrylate oligomers, polyether (meth)acrylate oligomers, epoxy (meth)acrylate oligomers, polycarbonate (meth)acrylate oligomers, urethane (meth)acrylate oligomers, (meth)acrylated (meth)acrylic oligomers, amine (meth)acrylate oligomers and any combination thereof.

The (meth)acrylated monomers comprise butyl(meth)acrylate, methyl(meth)acrylate, isobutyl(meth)acrylate, 2-ethylhexyl(meth)acrylate, cyclohexyl(meth)acrylate, n-hexyl(meth)acrylate, isobornyl(meth)acrylate, iso-octyl(meth)acrylate, n-lauryl(meth)acrylate, octyl/decyl(meth)acrylate, 2-hydroxyethyl(meth)acrylate, phenoxyethyl(meth)acrylate, nonylphenolethoxylate mono(meth)acrylate, 2-(-2-ethoxyethoxy)ethyl(meth)acrylate, 2-butoxyethyl(meth)acrylate, N-vinyl pyrrolidone, 1,6-hexanediol diacrylate (HDDA), di or tri propylene glycol diacrylate (DPGDA, TPGDA), ethoxylated and/or propoxylated neopentylglycoldi(meth)acrylate, pentaerythritoltriacrylate (PETIA) and the ethoxylated and/or propoxylated derivatives thereof, trimethylolpropanetri(meth)acrylate (TMPTA) and the ethoxylated and/or propoxylated derivatives thereof, di-trimethylolpropanetri(meth)acrylate (diTMPTA) glyceroltri(meth)acrylate and the ethoxylated and/or propoxylated derivatives thereof, bisphenol A di(meth)acrylate and the ethoxylated and/or propoxylated derivatives thereof, phenylglycidylether(meth)acrylate and the ethoxylated or/and propoxylated derivatives thereof, the (meth)acrylates obtained from the esterification with (meth)acrylic acid of aliphatic glycidyl ethers, especially those wherein the alkyl chain comprises from 6 to 24 carbon atoms, more preferably from 8 to 18 carbon atoms, and/or of glycidyl esters of saturated and unsaturated carboxylic acids, especially the glycidyl esters of long chain alkyl carboxylic acids wherein the alkyl chain comprises from 6 to 24 carbon atoms, more preferably from 8 to 18 carbon atoms. The (meth)acrylated monomers further comprise (meth)acrylic acid, beta-carboxyethyl acrylate, monomers resulting from the reaction of P₂O₅ with hydroxy group containing (meth)acrylates, especially 2-hydroxyethyl(meth)acrylate,

The (meth)acrylated monomers are preferably selected from ethoxylated and/or propoxylated neopentylglycoldi(meth)acrylate, pentaerythritoltriacrylate (PETIA) and the ethoxylated and/or propoxylated derivatives thereof, trimethylolpropanetri(meth)acrylate (TMPTA) and the ethoxylated and/or propoxylated derivatives thereof, di-trimethylolpropanetri(meth)acrylate (diTMPTA) glyceroltri(meth)acrylate and the ethoxylated and/or propoxylated derivatives thereof, beta-carboxyethyl acrylate, monomers resulting from the reaction of P₂O₅ with hydroxy group containing (meth)acrylates, especially 2-hydroxyethyl(meth)acrylate.

The composition according to the invention preferably contains one or more compounds C selected from multifunctional (meth)acrylates.

The composition according to the invention preferably contains from 1 % to 10 % by weight of multifunctional (meth)acrylates based on the total weight of (meth)acrylic copolymer A, radiation curable epoxy based compound B and compound C.

The radiation curable composition can also contain tackifiers as compound C. The tackifiers may be selected from the group consisting of: rosin tackifiers such as rosin acid, polymerized rosin acid, rosin esters and mixtures, and preferably hydrogenated rosin resins; hydrocarbon resins such as aliphatic and/or cycloaliphatic hydrocarbon tackifier resins, and preferably hydrogenated hydrocarbon resin; aromatic/aliphatic tackifier resins and preferably hydrogenated aromatic/aliphatic tackifier resins; polyterpene and terpene phenolic resins; aromatic resins polymerized from styrene, alpha-methyl styrene, vinyl toluene and mixtures; phenolic modified aromatic resins, benzoate resins, coumarone-indene; low molecular weight polyacrylates.

Some examples of commercial tackifiers suitable for the present invention include, but are not limited to, the aliphatic and/or cycloaliphatic hydrocarbon tackifier resins available commercially from ExxonMobil under the trade marks Escorez®5300 series with soft-point from 70 -150°C; the aromatic modified aliphatic tackifier resins available commercially from ExxonMobil under the trade marks Escorez®2000 series with soft-point from 10 -100°C; the hydrogenated and/or partially hydrogenated aromatic resins available commercially from Eastman Chemicals under the trade marks Regalrez®1018, 1085 1094, 3102, 1126, and/or PMR 1100; the polymerized aromatic resin available commercially from Eastman Chemicals under the trade marks Kristalex®3070, 3085 and/or PM-3370; the rosin esters available commercially from Arizona Chemicals under the trade marks Sylvalit®RE 80HP (rosin ester); and Sylvarez®TP7042 (high softening point (145-151 °C) thermally stable polyterpene phenol resin, TR 7115; TP2040 (thermoplastic terpene phenolic resin) and/or TR-1085 (polyterpene resin); the dicyclohexyl phthalate plasticizer and tackifier available commercially from Unitex Chemicals under the trade mark Uniplex®280.

Hydrogenated rosin resins, hydrogenated hydrocarbon resins are preferably used as tackifiers in the present invention.

If tackifiers are present in the composition according to the invention, their quantity is usually from 10 % to 60 % by weight based on the total weight of (meth)acrylic copolymer A, radiation curable epoxy based compound B and compound C.

According to a particular embodiment of the present invention, both one or more tackifiers and one or more radiation curable compounds are used as Compound C.

The radiation curable composition used in the process according to the invention usually also contains at least one polymerization inhibitor. Inhibitors include without limitation substituted phenol compounds such as hydroquinone, methyl hydroquinone (THQ), monomethyl ether of hydroquinone (MEHQ), tert-butyl hydroquinone, di-tert-butyl hydroquinone, 2,6-di-tert-butyl-4-methylphenol (BHT), as well as phenothiazine (PTZ), triphenyl antimony (TPS), oxalic acid and mixtures thereof.

The total amount of inhibitor used is generally from 0 to 1 % by weight, preferably from 0.01 to 0.5 % by weight of the composition.

The radiation curable compositions according to the invention may also comprise pigments, colorants, inert resins, fillers and/or other additives such as dispersing agents, surfactants, wetting agents, emulsifying agents, antioxidants, flow modification agents, slip agents, fire retardant agents, UV-protection agents, adhesion promoters and mixtures thereof. Inert resins include without limitation hydrocarbon resins, acrylic resins, aldehyde resins. The total amount of pigments, colorants, inert resins, fillers and/or additives generally does not exceed 60 % by weight, preferably it does not exceed 40 % by weight of the composition.

The radiation curable compositions may also comprise at least one photochemical initiator and/or chemical initiator, capable of initiating the polymerization of the radiation curable oligomer and optionally the other radiation curable compounds present therein. Photochemical initiators (also called photoinitiators) are compounds that can generate radicals by absorption of light, typically UV light. The photoinitiators are preferably free-radical photoinitiators. In some embodiments of the invention wherein the acrylated copolymer and/or the optional epoxy compound are not fully reacted, photoinitiators may also comprise cationic photoinitiators.

When cured under UV-light, curable compositions comprising at least one photoinitiator are preferred. The amount of photoinitiator or chemical initiator in the composition is preferably comprised between 0.001 and 20 wt%, more preferably between 0.01 and 10 wt%. The composition according to the invention may also comprise from 0 to 5 % by weight of one or more photosensitizers.

Alternatively, the compositions can be cured in the absence of a photoinitiator, especially by electron beam radiation.

The radiation curable compositions according to the present invention are particularly suitable for making adhesives, especially pressure sensitive adhesives.

Upon exposure to actinic radiations such as ultraviolet radiations, γ-rays, X-rays or electron beam, the radiation curable compositions according to the present invention generally acquire adhesive characteristics, especially pressure sensitive adhesive characteristics.

The present invention therefore further relates to a method of preparing an adhesive composition, especially a pressure sensitive adhesive composition, comprising the steps of :
(a) providing a radiation curable composition according to the present invention,
(b) applying said composition to a substrate,
(c) exposing said composition to an actinic radiation source to cure the said composition.

The present invention further relates to an adhesive and/or pressure sensitive adhesive obtained from curing a composition according to the invention.

In the method according to the invention, the radiation curable compositions can be applied to the surface by any means suitable therefore, including dip coating, spray coating, electrostatic coating, slot die, film coating, curtain coating, vacuum application, roll coating or the like. It is preferably applied by slot die or roll coating. The compositions can be applied at any suitable temperature, preferably between 60 and 120 °C.

The substrate to be coated can be any substrate, especially paper, metal and polymeric substrates.

The irradiation of the surface can be done by actinic radiations such as ultraviolet radiations, γ-rays, X-rays or electron beam. In the process according to the invention, electron beam and especially UV-radiations are preferred.

The radiation curable compositions obtainable by the process according to the present invention present several advantages. In comparison to known hot melt systems, the compositions obtainable by the process according to the present invention advantageously are lower viscous and hence provide a broader formulation window enlarging the possibilities of use. They can be applied to heat sensitive substrates like plastics that do not resist to the high coating temperatures of the hot melt systems. In comparison to known solvent based systems, the compositions obtainable by the process according to the present invention can be applied at a high film thickness in one single pass, leading to a more efficient application process in terms of production time, energy consumption, waste generation and floor use. Furthermore, they will not give rise to the emission of solvent vapors during and after application what is advantageous for use in applications like automotive and electronics. The cured compositions present an excellent adhesion on both low and high surface energy substrates like polyethylene and stainless steel, respectively, while keeping a good cohesive strength.

The present invention will now be described in detail with reference to the following non limiting examples which are by way of illustration only.

Methods used:
Epoxy content: The epoxy content is determined by potentiometric titration using 0.1 N perchloric acid solution in acetic acid as reagent and a cetyltrimethylammonium bromide (2% solution in acetic acid) as titration solvent. The addition of perchloric acid to the titration solvent generates in situ hydrogen bromide (HBr) which reacts immediately with the oxirane functional groups at an elevated temperature (above 40°C at the end of the titration). The titration is finished when an excess of HBr is produced resulting in a potential jump measured by the electrode, after all the oxirane groups have been converted to the corresponding bromohydrin.

Double bonds content: The double bonds content is measured by nuclear magnetic resonance (NMR) spectroscopy and is expressed in g of composition per equivalent of double bond. A sample of the composition is dissolved in deuterated chloroform (CDCl₃) and submitted to proton NMR analysis using 1,3,5-bromobenzene as an internal standard. The comparison between the peak assigned to the 3 aromatic protons of the internal standard and the peaks assigned to 3 protons of the double bonds allows to calculate the molar concentration of double bonds according to the formula (A x B) / C, wherein A is the integration of the signal of the protons from the double bonds present in the sample, B is the number of moles of the internal standard added to the sample, and C is the integration of the internal standard signal.

Test sample preparation: All tapes for the PSA results herein are made by adhesive transfer. The uncured, liquid PSA composition is drawn down on release paper (Loparex Poly Slik 111/120, Apeldoorn, The Netherlands, roll No. W03180672). Drawdowns are made at 100 °C using a Gardco Automatic Drawdown Machine, 30 cm stroke, on the slowest speed (ca. 1.5 m/min), using a Braive Instruments adjustable Bird applicator, typically at 50 to 130 µm setting. The composition is UV cured at a conveyer belt speed of 10 m/min with a UV-Fusion lamp BF9 (H-bulb) having a power of 200 watts/cm.

The cooled film is laminated with a 23 µm thick polyester film using two double passes of a 2 kg hard rubber roller. The laminate is cut into strips of 2.5 cm by approximately 17.5 cm.

All room temperature performance testing is conducted in a constant temperature/constant humidity controlled room held at 23 ± 2 °C., 50 ± 5 % relative humidity.

### Peel testing

The tapes prepared as described here above are applied on stainless steel (SS) and high density polyethylene (HDPE) test panels. Peel tests are conducted 20 minutes after application according to EN 1939 on an Instron machine. Results are reported in N per 25 mm.

### Shear Resistance

The shear resistance is a measure of the cohesiveness or internal strength of an adhesive. It is based upon the amount of force required to pull an adhesive strip from a standard flat surface in a direction parallel to the surface to which it has been affixed with a definite pressure. It is measured in terms of time required to pull a standard area of adhesive coated sheet material from a stainless steel test panel under a constant load.

The tests are conducted on tapes applied to a stainless steel panel such that a 6.25 mm by 6.25 mm portion of each tape is in firm contact with the panel with one end portion of the tape being free. The panel with tape attached is held in a rack so that the panel forms an angle of 178°. A 1 kg weight is hanged on the extended tape free end. Results are reported in minutes.

### Example 1 :

### Step 1 :

166.74 parts of epoxy compound Cardura®E 10 P are brought in a double walled flask of 3 I equipped with a stirrer, a condenser and an inlet for nitrogen.

The flask content is heated and stirred continuously while nitrogen is moderately purged through the flask. At a temperature of 90 +/- 2 °C, 0.25 parts of 2,2' azobis (2-methylbutanenitrile) is added in the flask. 30 minutes after this addition a mixture is pumped into the Cardura®E 10 P mass consisting of:
- 373.59 parts of 2-ethyl hexyl acrylate
- 56.16 parts of acrylic acid
- 146.43 parts of methyl acrylate
- 226.16 parts of ethyl acrylate
- 8.02 parts of n-dodecylmercaptan
- 2.91 parts of 2,2' azobis (2-methylbutanenitrile)

This addition takes 240 minutes.

120 minutes after completion of the monomers mixture addition, 0.48 parts of monomethyl ether hydroquinone and 1.21 parts of AMC-2 (chromium catalyst) are added to the flask and the reaction medium is heated gradually to a mass temperature of 105 °C. The nitrogen gas introduction is stopped.

### Step 2:

The flask of step 1 is equipped with an air introduction tube, and an inlet for the acrylic acid addition. Air is continuously purged through the flask and 18,04 parts of acrylic acid are gradually pumped over a time period of 30 minutes. The epoxy content is checked regularly by potentiometric titration.

One hour after completion of the acrylic acid addition a residual epoxy content of 0,01 meq/g is measured and the reaction is stopped.

The final composition has a double bonds content of 3940 g/eq.

### Examples 2 and 3:

Example 1 is repeated using 665 parts (Example 2) and 332 parts (Example 3) of Cardura®E 10 P on total weight.

### Examples 4 to 6:

In Examples 4 to 6, compositions are prepared by mixing at 90 °C the components of table 1 until a homogeneous mixture is obtained.

**Table 1:**

| | Example 4 | Example 5 | Example 6 |
|---|---|---|---|
| resin | 100 parts composition | 100 parts composition | 100 parts composition |
| | of Example 1 | of Example 2 | of Example 3 |
| Additol®HDMAP | 4 parts | 4 parts | 4 parts |
| photoinitiator | | | |
| TMPTA | 3 parts | 3 parts | 3 parts |

Compositions of Examples 4 to 6 are tested for peel and shear performances. The results are summarized in table 2.

**Table 2:**

| Example | Peel SS | Peel HDPE | Shear |
|---|---|---|---|
| | N/25 mm | N/25mm | min |
| 4 | 15 CT | 17 CT | 28 |
| 5 | 7.29 AFS | 4.70 AFS | 30 |
| 6 | 14 AFS | 11 AFS | 66 |

| | | | |
|---|---|---|---|
| SS: stainless steel HDPE: high density polyethylene AFS : adhesive failure substrate CT : cohesive transfer AFF : adhesive failure facestock | | | |

As can be seen from Table 2, the compositions according to the present invention, especially when formulated with a photoinitiator and multifunctional acrylates can generate pressure sensitive adhesives with the required properties. The examples show it is possible to prepare compositions having excellent adhesion onto substrates characterized by a very different surface energy such as stainless steel and plastic while providing a good shear.

## Claims

1. Process for the preparation of a radiation curable composition comprising at least one (meth)acrylic copolymer A and at least one radiation curable epoxy based compound B, said process comprising:
(a) in a first copolymerization step, the preparation of a (meth)acrylic copolymer A by copolymerization of monomers comprising:
(i) from 39 to 98.9 weight % of at least one (meth)acrylic monomer (a1),
(ii) from 0.1 to 60 weight % of at least one other copolymerizable monomer (a2) different from (meth)acrylic monomer (a1),
(iii) from 1 to 15 weight % of at least one copolymerizable monomer (a3) having at least one carboxylic acid group or group capable of forming a carboxylic acid group,
in the presence of at least one non-copolymerizable epoxy compound (b1) and
(b) in a subsequent esterification step, the preparation of a radiation curable epoxy based compound B by esterification of the non-copolymerizable epoxy compound (b1) with at least one radiation curable monomer having at least one carboxyl ic acid group (a4).

2. Process according to claim 1 wherein the (meth)acrylic monomer (a1) is selected from alkyl (meth)acrylates having a Tg, when homopolymerized, of less than -30°C and wherein the copolymerizable monomer (a2) is selected from monomers having a Tg, when homopolymerized, of more than -30°C.

3. Process according to any of claims 1 or 2 wherein the (meth)acrylic monomer (a1) is selected from 2-ethylhexyl acrylate, butylacrylate and mixtures thereof.

4. Process according to any of claims 1 to 3 wherein the copolymerizable monomer (a2) is selected from methyl (meth)acrylate, ethylacrylate, tert-butyl (meth)acrylate, vinyl acetate, styrene and mixtures thereof.

5. Process according to any of claims 1 to 4 wherein the copolymerizable monomer (a3) is selected from (meth)acrylic acid.

6. Process according to any of claims 1 to 5 wherein the radiation curable monomer (a4) is selected from (meth)acrylic acid.

7. Process according to any of claims 1 to 5 wherein the non-copolymerizable epoxy compound (b1) is selected from glycidyl esters of saturated or unsaturated carboxylic acids, glycidyl ethers of aliphatic or aromatic polyols, and mixtures thereof.

8. Process according to any of claims 1 to 6 wherein the non-copolymerizable epoxy compound (b1) is selected from the monoglycidyl esters of long chain alkyl carboxylic acids wherein the alkyl chain comprises from 6 to 24 carbon atoms.

9. Process according to any of claims 1 to 7 wherein:
(iii) from 5 to 60 % by weight of non-copolymerizable epoxy compound (b1), and
(iv) from 40 to 95 % by weight of monomers comprising the monomers (a1), (a2) and (a3) based on the total weight of non-copolymerizable epoxy compound (b1) and monomers comprising the monomers (a1), (a2) and (a3) are used in the copolymerization step.

10. Process according to any of claims 1 to 8 wherein the amount of monomer (a4) used in the esterification step is such that the equivalent ratio of carboxylic acid groups of copolymerizable monomer (a4) to epoxy groups provided by the non-copolymerizable epoxy compound (b1) is from 0.9 to 1.1.

11. Process according to any of claims 1 to 10 comprising a step wherein at least one compound C is added.

12. A radiation curable composition obtainable by the process according to any of claims 1 to 11.

13. A radiation curable composition according to claim 12 comprising:
(i) from 20 to 95 % by weight of (meth)acrylic copolymer A, and
(ii) from 5 to 80 % by weight of radiation curable epoxy based compound B, based on the total weight of (meth)acrylic copolymer A and of radiation curable epoxy based compound B.

14. A radiation curable composition according to claim 12 comprising:
(i) from 40 to 99 % by weight of the radiation curable composition comprising the (meth)acrylic copolymer A and the radiation curable epoxy based compound B, and
(ii) from 1 to 60 % by weight of at least one compound C, based on the total weight of(meth)acrylic copolymer A, radiation curable epoxy based compound B and compound C.

15. Method of preparing an adhesive and/or pressure sensitive adhesive comprising the steps of :
(a) providing a radiation curable composition according to any of claims 12 to 14,
(b) applying said composition to a substrate,
(c) exposing said composition to an actinic radiation source to cure the said composition.

16. Adhesives and/or pressure sensitive adhesives obtained from curing a composition according to claim 12 to 14.
